# FASCICULE DE BREVET EUROPEEN

(11) **EP 3 095 616 B1**
(45) Date de publication et mention de la délivrance du brevet: **14.09.2022**
(21) Numéro de dépôt: 16290086.4
(22) Date de dépôt: 18.05.2016
(51) Int. Cl.: B60B 33/00

(54) **ROULETTE POUR MEUBLE**
ROLLE FÜR MÖBELSTÜCK
FURNITURE CASTER

(30) Priorité: 20.05.2015 FR 1501039
(43) Date de publication de la demande: 23.11.2016
(73) Titulaire: TENTE ROULETTES POLYMERES-BRUANDET, 39700 La Barre (FR)
(72) Inventeur: Dayt, Patrick, 25000 Besancon (FR); Marquiset, Cyril, 25410 Pouilley (FR)
(74) Mandataire: Flavenot, Bernard

(56) Documents cités:
- EP-A1- 2 590 531
- WO-A1-2006/114131
- DE-A1-102011 054 200
- DE-U1- 29 501 456
- DE-U1- 29 501 456

## Description

La présente invention concerne les roulettes pour meuble, c'est-à-dire les roulettes destinées à être montées sur un meuble pour en favoriser son déplacement, étant entendu que, par meuble, il est compris, au sens de la présente description, tout corps de quelque nature que ce soit, pour quelque fonction que ce soit, par exemple une table, un lit, un chariot, un caddie, une valise, etc.,

Une roulette pour meuble comporte de façon générale un carter de roue, au moins une roue, un pivot définissant un premier axe et comprenant deux parties, une première partie apte à coopérer, en fixation par tous moyens permanents ou pas, avec le meuble et une seconde partie montée en coopération avec le carter de roue, et des moyens pour monter la roue en rotation par rapport au carter de roue autour d'un second axe faisant avec le premier axe un angle non nul, généralement un angle droit.

Quand ces meubles doivent être déplacés en tout lieu de façon relativement souvent, comme par exemple les valises ou analogues, il est nécessaire que ces roulettes soient montées sur des moyens d'amortissement, ne serait-ce que pour le confort de l'utilisateur de ces valises et le soin qu'il peut apporter à leur manipulation.

Il existe déjà de telles roulettes, par exemple celles qui sont décrites dans le FR3.009.700 et/ou le EP2.625.048, au nom de la Demanderesse et le DE 10 2011 054200.

Ces réalisations donnent de très bons résultats mais, comme tout industriel, la Demanderesse se doit de perfectionner les réalisations de l'art antérieur, y compris ses propres réalisations.

Aussi, la présente invention a-t-elle pour but de réaliser une roulette pour meuble qui perfectionne les roulettes de l'art antérieur.

Plus précisément, la présente invention a pour objet une roulette pour meuble comportant les caractéristiques énoncées dans la revendication 1 annexée dont les caractéristiques listées dans le préambule de celle-ci sont connues du DE 10 2011 054 200.

D'autres caractéristiques et avantages de la présente invention apparaîtront au cours de la description suivante donnée en regard des dessins annexés à titre illustratif mais nullement limitatif, dans lesquels :
Les figures 1 à 3 sont trois coupes longitudinales respectivement de trois modes de réalisation d'une partie de la roulette selon l'invention, les figures 2 et 3 représentant respectivement deux modes de réalisation possibles de la partie encerclée et référencée C sur la figure 1, et
La figure 4 est une vue en perspective d'un mode de réalisation industriel de la roulette selon l'invention, avec une découpe pour faire ressortir la structure de la roulette.

Il est tout d'abord précisé que, dans la présente description, si l'adverbe "sensiblement" est associé à un qualificatif d'un moyen donné, ce qualificatif doit être compris au sens strict ou approché.

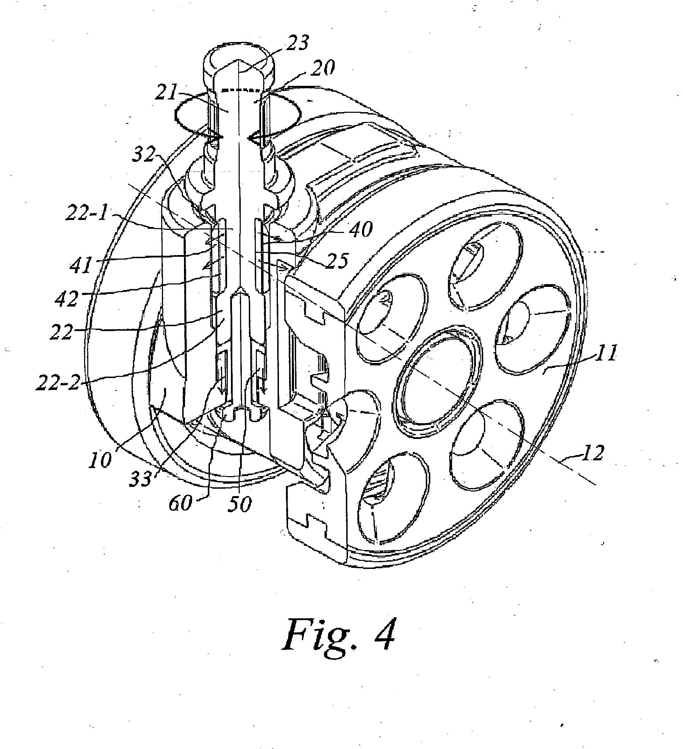

En regard des figures annexées, la présente invention concerne une roulette qui comporte un carter de roue 10, au moins une roue 11, en général deux (figure 4), des moyens pour monter la roue 11 en rotation par rapport au carter de roue 10 autour d'un premier axe 12, un pivot 20 cylindrique de révolution comprenant deux parties, une première partie de pivot 21 apte à coopérer avec le meuble et une seconde partie de pivot 22, et des moyens pour monter la seconde partie de pivot 22 en rotation par rapport au carter de roue 10 autour d'un second axe 23 faisant avec le premier axe 12 un angle non nul, de préférence un angle droit.

Selon une caractéristique de l'invention, la seconde partie de pivot 22 comporte au moins une première portion de pivot 22-1 et une seconde portion de pivot 22-2, la première portion de pivot 22-1 étant comprise entre la seconde portion de pivot 22-2 et la première partie de pivot 21, et les moyens pour monter cette seconde partie de pivot 22 en rotation par rapport au carter de roue 10 autour d'un second axe 23 comportent un orifice borgne 30 cylindrique de révolution défini selon le second axe 23, cet orifice borgne étant réalisé dans le carter de roue 10 en débouchant à son extrémité 31 sur une paroi latérale de ce carter de roue 10 par une ouverture 32.

Cet orifice borgne 30 comprend au moins deux zones, une première zone 30-1 d'une longueur déterminée et ayant un diamètre supérieur à la première portion de pivot 22-1 et une seconde zone 30-2 comprise entre le fond 33 de l'orifice borgne 30 et la première zone 30-1, le diamètre de la seconde portion de pivot 22-2 étant égal au diamètre de la seconde zone 30-2 de l'orifice borgne.

Les moyens pour monter la seconde partie de pivot 22 en rotation par rapport au carter de roue 10 comportent en outre une gorge circulaire 25 réalisée dans la première portion de pivot 22-1, la hauteur prise selon le second axe 23 de cette gorge circulaire étant inférieure à la longueur de la première zone 30-1 et cette gorge circulaire étant réalisée de façon qu'elle soit en regard de cette première zone et que l'espace défini entre les deux plans passant par ses deux extrémités et perpendiculaires au second axe 23 coupe entièrement cette première zone en définissant en outre deux parties 36, 37 de cette première zone respectivement de chaque côté de cet espace.

Les moyens pour monter la seconde partie de pivot 22 en rotation par rapport au carter de roue 10 comportent en outre une bague 40 cylindrique de révolution enfichée serrée dans la gorge circulaire 25, la bague ayant un diamètre extérieur sensiblement égal à celui de la première zone 30-1 de l'orifice borgne 30 et un diamètre intérieur sensiblement égal au diamètre de la paroi de fond de la gorge 25, et un tampon amortisseur 50 cylindrique de révolution disposé entre le fond 33 de l'orifice et la seconde partie de pivot 22, le diamètre extérieur de ce tampon amortisseur étant sensiblement égal au diamètre de la seconde zone 30-2 de l'orifice borgne 30.

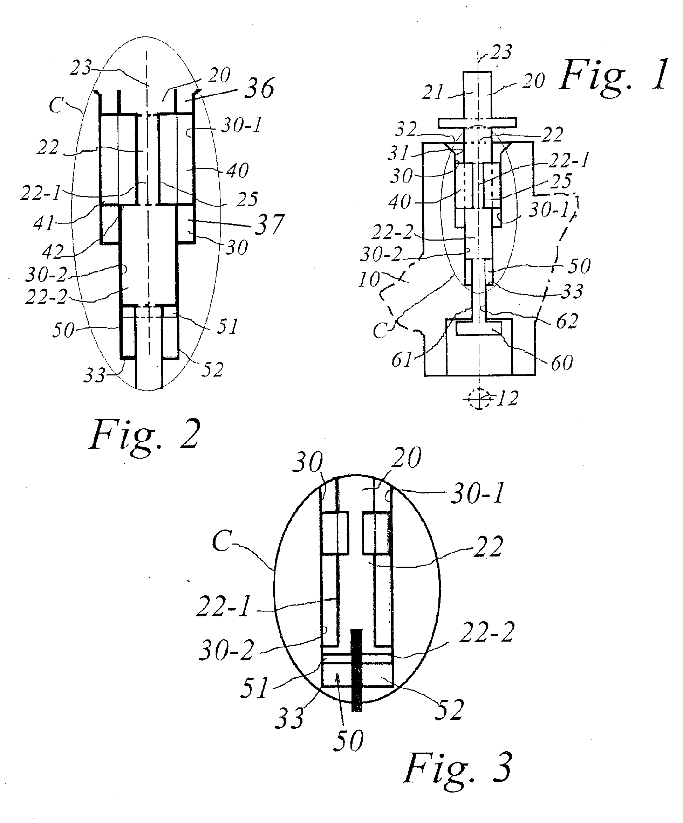

Il faut bien souligner que la première zone 30-1 et la seconde zone 30-2 de l'orifice borgne 30 peuvent avoir un même diamètre, comme schématisé sur la figure 3. Mais, de façon très préférentielle, comme illustré sur les figures 1 et 2, le diamètre de la seconde zone 30-2 est nettement inférieur au diamètre de la première zone 30-1, dans le but qui sera explicité ci-après.

Selon une caractéristique importante de l'invention, la bague 40 est constituée d'une bague intérieure 42 et d'une bague extérieure 41 situées l'une dans l'autre et concentriques, la bague intérieure étant en un matériau moins dur que le matériau dans lequel est réalisée la bague extérieure, la bague intérieure 42 ayant essentiellement pour fonction de favoriser l'amortissement d'efforts selon des directions perpendiculaires au second axe 23, et la bague extérieure ayant, elle, pour fonction de favoriser un éventuel glissement de cette bague selon une direction parallèle à ce même second axe, glissement notamment dû à la présence du tampon amortisseur 50 qui favorise l'amortissement d'efforts selon une direction parallèle à ce second axe 23.

Quant au tampon amortisseur 50, il est très avantageusement constitué, figures 2, 3 et 4 de deux blocs positionnés l'un sur l'autre, un premier bloc 51 situé au contact de la seconde portion 22-2 de la seconde partie de pivot 22 et un second bloc 52 situé entre le premier bloc 51 et le fond 33 de l'orifice borgne 30, le premier bloc 51 étant en un matériau plus dur que celui dans lequel est réalisé le second bloc 52.

Ces deux blocs 51, 52 ont respectivement pour fonction, pour le bloc 51 de favoriser un éventuel glissement le long de la seconde zone 30-2 de l'orifice borgne 30 selon une direction parallèle au second axe 23, pour le bloc 52 de favoriser l'amortissement des efforts selon une direction parallèle à l'axe 23.

Bien entendu, il est tout à fait préférable que la roulette comporte des moyens 60 pour maintenir le pivot 20, dans la configuration décrite ci-avant, selon un degré de rotation dans l'orifice borgne 30, c'est-à-dire pour lui permettre de pivoter sur lui-même autour du second axe 23 et sensiblement sans degré de translation, c'est-à-dire pour empêcher que la seconde partie de pivot 22 ne sorte de l'orifice borgne 30 et éviter par exemple que le meuble, comme une valise, perde la ou les roulettes qui lui permettent de rouler.

Avantageusement, les moyens 60 pour maintenir le pivot 20 selon un degré de rotation dans l'orifice 30 et sensiblement sans degré de translation sont constitués par une vis ou analogue (i.e. : un boulon, etc.) vissée dans la seconde portion 22-2 de la seconde partie de pivot 22 selon un axe de vissage sensiblement confondu avec le second axe 23, ladite vis traversant, par des percées traversantes centrées sur le second axe 23, successivement le carter 10 et le tampon amortisseur 50.

De façon préférentielle, pour avoir les fonctions définies ci-avant, la bague extérieure 41 et le premier bloc 51 sont en un matériau choisi parmi les matériaux suivants : PA (Polyamide) et POM (Polyoxyméthylène), la bague intérieure 41 et le second bloc 52 sont en un matériau choisi parmi les matériaux suivants : PUR (Polyuréthane) et TPE (Elastomère thermoplastique de la famille des copolymères).

Une telle roulette peut être utilisée sur tous les meubles, mais trouve une application particulièrement avantageuse pour équiper des meubles qui doivent être souvent déplacés, par exemple les valises de personnes qui voyagent très souvent.

En effet, ces valises doivent être roulées sur divers sols plus ou moins bien surfacés et les roulettes dont elles sont équipées sont alors soumises à des chocs qui se transmettent au corps de la valise, à son contenu et à son utilisateur, ce qui est très déplaisant. En outre, la répétitivité de ces chocs contribuerait à réduire considérablement la durée de vie des roulettes, et en conséquence de la valise dans son entier.

Avec la roulette selon l'invention, la bague 40 configurée en une bague intérieure 42 et une bague extérieure 41 permet d'amortir les composantes des chocs qui sont perpendiculaires au second axe 23, à savoir celles qui sont horizontales lors du déplacement du meuble par roulement, et donc essentiellement les chocs latéraux.

Quant aux composantes parallèles à l'axe 23, c'est-à-dire celles qui sont verticales et donc émanant essentiellement de chocs qui sont dus à des obstacles sur le sol de roulement, elles sont amorties par le tampon amortisseur 50.

Il est à noter que la bague extérieure 41 permet le glissement de la première portion 22-1 de la seconde partie 22 du pivot 20 sur la première zone 30-1 de l'orifice borgne 30 quand le bloc 52 du tampon amortisseur 50 joue son rôle, à savoir lorsqu'il se comprime et donc se réduit en longueur. De même, le bloc 51 favorise le glissement sur la sur la seconde zone 30-2 de l'orifice 30.

Des réalisations comme celles illustrées sur les figures 1, 2 et 4, dans lesquelles la seconde zone 30-2 de l'orifice borgne 30 a un diamètre très inférieur à celui de la première zone 30-1, présentent un avantage par rapport à une réalisation comme celle illustrée sur la figure 3, dans laquelle les deux zones 30-1 et 30-2 ont par exemple un même diamètre relativement grand.

En effet, dans le cas où la seconde zone 30-2 a un diamètre inférieur à celui de la première zone 30-1, la seconde portion 22-2 du pivot 20 est mieux maintenue latéralement que la première portion 22-1. Elle peut même être considérée comme maintenue sensiblement ponctuellement et ne sera donc soumise qu'à des oscillations latérales de faible amplitude.

Ces oscillations seront malgré tout transmises au corps de la valise via la première portion 22-1 et la première partie 21 de pivot 20, mais la masse essentiellement du corps de la valise les amortira aidée en cela par la bague 40 à cause de sa structure comme définie ci-avant.

Les effets décrits ci-dessus vont contribuer encore plus à limiter l'usure prématurée des roues de la roulette, et donc de la roulette elle-même dans son ensemble.

A la lecture de la description faite ci-dessus de la structure de la roulette selon l'invention, il apparaît aisément que les buts de l'invention sont relativement bien atteints.

L'application d'une telle roulette à une valise n'est donnée ci-dessus qu'à titre d'exemple, et il est bien évident qu'une telle roulette peut être utilisée pour équiper bien d'autres meubles, comme spécifié ci-avant.

## Revendications

1. Roulette pour pied de meuble comportant :
• un carter de roue (10),
• au moins une roue (11),
• des moyens pour monter ladite roue (11) en rotation par rapport au carter de roue (10) autour d'un premier axe (12),
• un pivot (20) cylindrique de révolution comprenant deux parties, une première partie de pivot (21) apte à coopérer avec le meuble et une seconde partie de pivot (22), et
• des moyens pour monter la seconde partie de pivot (22) en rotation par rapport au dit carter de roue (10) autour d'un second axe (23) faisant avec le premier axe (12) un angle non nul, ladite seconde partie de pivot (22) comportant au moins une première portion de pivot (22-1) et une seconde portion de pivot (22-2), la première portion de pivot (22-1) étant comprise entre la seconde portion de pivot (22-2) et la première partie de pivot (21), les moyens pour monter cette seconde partie de pivot (22) en rotation par rapport au carter de roue (10) autour d'un second axe (23) comportant
• un orifice borgne (30) cylindrique de révolution défini selon le second axe (23), ledit orifice borgne étant réalisé dans ledit carter de roue (10) en débouchant à son extrémité (31) sur une paroi latérale de ce dit carter de roue (10) par une ouverture (32), ce dit orifice borgne (30) comprenant au moins deux zones, une première zone (30-1) d'une longueur déterminée et ayant un diamètre supérieur à la première portion de pivot (22-1) et une seconde zone (30-2) comprise entre le fond (33) du dit orifice borgne (30) et la première zone (30-1), le diamètre de la seconde portion de pivot (22-2) étant égal au diamètre de la seconde zone (30-2),
**caractérisée par le fait qu'**elle comporte en outre
• une gorge circulaire (25) réalisée dans la première portion de pivot (22-1), la hauteur prise selon la second axe (23) de ladite gorge circulaire étant inférieure à la longueur de ladite première zone (30-1), cette dite gorge circulaire étant réalisée de façon qu'elle soit en regard de cette première zone et que l'espace défini entre les deux plans passant par ses deux extrémités et perpendiculaires au dit second axe (23) coupe entièrement cette première zone en définissant en outre deux parties (36, 37) de cette première zone respectivement de chaque côté de cet espace,
• une bague (40) cylindrique de révolution située dans ladite gorge (25), ladite bague ayant un diamètre extérieur sensiblement égal à celui de ladite première zone (30-1) de l'orifice borgne (30) et un diamètre intérieur sensiblement égal au diamètre de la paroi de fond de ladite gorge (25), et
• un tampon amortisseur (50) cylindrique de révolution disposé entre le fond (33) du dit orifice et la seconde partie de pivot (22), le diamètre extérieur de ce dit tampon amortisseur étant sensiblement égal au diamètre de la seconde zone 30-2 de l'orifice borgne (30).

2. Roulette selon la revendication 1, **caractérisée par le fait que** ladite bague (40) est constituée d'une bague intérieure (42) et d'une bague extérieure (41) situées l'une dans l'autre et concentriques, la bague intérieure étant en un matériau moins dur que le matériau dans lequel est réalisée la bague extérieure.

3. Roulette selon l'une des revendications 1 et 2, **caractérisée par le fait que** ledit tampon amortisseur (50) est constitué de deux blocs positionnés l'un sur l'autre, un premier bloc (51) situé au contact de la seconde portion (22-2) de ladite seconde partie de pivot (22) et un second bloc (52) situé entre ledit premier bloc (51) et le fond (33) du dit orifice borgne (30), le premier bloc (51) étant en un matériau plus dur que celui dans lequel est réalisé le second bloc (52).

4. Roulette selon l'une des revendications 1 à 3, **caractérisée par le fait que** le diamètre de la seconde zone (30-2) est inférieur au diamètre de la première zone (30-1).

5. Roulette selon l'une des revendications précédentes, **caractérisée par le fait qu'**elle comporte des moyens (60) pour maintenir ledit pivot (20) selon un degré de rotation dans ledit orifice (30) et sensiblement sans degré
de translation dans le but de permettre au pivot (20) de pivoter sur lui-même autour du second axe (23) et d'empêcher que la seconde partie de pivot (22) ne sorte de l'orifice borgne (30).

6. Roulette selon la revendication 5, **caractérisée par le fait que** les moyens (60) pour maintenir ledit pivot (20) selon un degré de rotation dans ledit orifice (30) et sensiblement sans degré de translation sont constitués par une vis vissée dans la seconde portion (22-2) de la seconde partie de pivot (22) selon un axe de vissage sensiblement confondu avec le second axe (23), ladite vis traversant, par des percées traversantes centrées sur ledit second axe (23), successivement ledit carter (10) et ledit tampon amortisseur (50).

7. Roulette selon l'une des revendications précédentes quand elle dépend des revendications 2 et 3, **caractérisée par le fait que** la bague extérieure (41) et le premier bloc (51) sont en un matériau choisi parmi les matériaux suivants : PA (Polyamide) et POM (Polyoxyméthylène), et que la bague intérieure (41) et le second bloc (52) sont en un matériau choisi parmi les matériaux suivants: PUR (Polyuréthane) et TPE (Elastomère thermoplastique de la famille des copolymères).

## Patentansprüche

1. Laufrolle für einen Möbelfuß, umfassend:
• ein Radgehäuse (10),
• mindestens ein Rad (11),
• Mittel zum Montieren des Rades (11) drehbar in Bezug auf das Radgehäuse (10) um eine erste Achse (12),
• einen rotationszylindrischen Drehzapfen (20), der zwei Teile aufweist, einen ersten Drehzapfenteil (21), der mit dem Möbel zusammenwirken kann, und einen zweiten Drehzapfenteil (22), und
• Mittel zum Montieren des zweiten Drehzapfenteils (22) für eine Drehung in Bezug auf das Radgehäuse (10) um eine zweite Achse (23), die mit der ersten Achse (12) einen Winkel ungleich Null bildet,
wobei der zweite Drehzapfenteil (22) umfasst:
mindestens einen ersten Drehzapfenabschnitt (22-1) und einen zweiten Drehzapfenabschnitt (22-2), wobei der erste Drehzapfenabschnitt (22-1) zwischen dem zweiten Drehzapfenabschnitt (22-2) und dem ersten Drehzapfenteil (21) liegt, wobei die Mittel zum Montieren dieses zweiten Drehzapfenteils (22) für eine Drehung in Bezug auf das Radgehäuse (10) um eine zweite Achse (23) umfassen:
• ein rotationszylindrisches Sackloch (30), das längs der zweiten Achse (23) definiert ist, wobei das Sackloch in dem Radgehäuse (10) realisiert ist, indem es an seinem Ende (31) über eine Öffnung (32) an einer Seitenwand dieses Radgehäuses (10) mündet, wobei dieses Sackloch (30) mindestens zwei Zonen umfasst, eine erste Zone (30-1) mit einer bestimmten Länge und einem Durchmesser, der größer als der des ersten Drehzapfenabschnitts (22-1) ist, und eine zweite Zone (30-2), die zwischen dem Boden (33) des Sacklochs (30) und der ersten Zone (30-1) liegt, wobei der Durchmesser des zweiten Drehzapfenabschnitts (22-2) gleich dem Durchmesser der zweiten Zone (30-2) ist,
**dadurch gekennzeichnet, dass** sie außerdem Folgendes umfasst:
• eine kreisförmige Nut (25), die in dem ersten Drehzapfenabschnitt (22-1) ausgebildet ist, wobei die Höhe längs der zweiten Achse (23) der kreisförmigen Nut kleiner als die Länge der ersten Zone (30-1) ist, wobei diese kreisförmige Nut so ausgebildet ist, dass sie dieser ersten Zone gegenüberliegt und dass der zwischen den beiden Ebenen, die durch diese beiden Enden und senkrecht zu der zweiten Achse (23) verlaufen, definierte Raum diese erste Zone vollständig schneidet, wobei außerdem zwei Teile (36, 37) dieser ersten Zone jeweils auf jeder Seite dieses Raums definiert werden,
• einen rotationszylindrischen Ring (40), der sich in der Nut (25) befindet, wobei der Ring einen Außendurchmesser besitzt, der im Wesentlichen gleich dem Durchmesser der ersten Zone (30-1) des Sacklochs (30) ist, und einen Innendurchmesser besitzt, der im Wesentlichen gleich dem Durchmesser der Bodenwand der Nut (25) ist, und
• einen rotationszylindrischen Dämpfungspuffer (50), der zwischen dem Boden (33) des Lochs und dem zweiten Drehzapfenabschnitt (22) angeordnet ist, wobei der Außendurchmesser dieses Dämpfungsstopfens im Wesentlichen gleich dem Durchmesser der zweiten Zone (30-2) des Sacklochs (30) ist.

2. Laufrolle nach Anspruch 1, **dadurch gekennzeichnet, dass** der Ring (40) aus einem Innenring (42) und einem Außenring (41) gebildet ist, die ineinander liegen und konzentrisch sind, wobei der Innenring aus einem Material besteht, das weniger hart ist als das Material, aus dem der Außenring hergestellt ist.

3. Laufrolle nach einem der Ansprüche 1 und 2, **dadurch gekennzeichnet, dass** der Dämpfungspuffer (50) aus zwei übereinander positionierten Blöcken gebildet ist, wobei ein erster Block (51) sich in Kontakt mit dem zweiten Abschnitt (22-2) des zweiten Drehzapfenabschnitts (22) befindet und sich ein zweiter Block (52) zwischen dem ersten Block (51) und dem Boden (33) des Sacklochs (30) befindet, wobei der erste Block (51) aus einem Material gebildet ist, das härter ist als jenes, aus dem der zweite Block (52) gefertigt ist.

4. Laufrolle nach einem der Ansprüche 1 bis 3, **dadurch gekennzeichnet, dass** der Durchmesser der zweiten Zone (30-2) kleiner ist als jener der ersten Zone (30-1).

5. Laufrolle nach einem der vorhergehenden Ansprüche, **dadurch gekennzeichnet, dass** sie Mittel (60) umfasst zum Halten des Drehzapfenteils (20) mit einem Rotationsfreiheitsgrad in dem Loch (30) und im Wesentlichen ohne Translationsfreiheitsgrad, um dem Drehzapfen (20) zu ermöglichen, sich um sich selbst um die zweite Achse (23) zu drehen, und um zu verhindern, dass der zweite Drehzapfenteil (22) aus dem Sackloch (30) heraustritt.

6. Laufrolle nach Anspruch 5, **dadurch gekennzeichnet, dass** die Mittel (60) zum Halten des Drehzapfenteils (20) mit einem Rotationsfreiheitsgrad in dem Loch (30) und im Wesentlichen ohne Translationsfreiheitsgrad durch eine Schraube gebildet werden, die in den zweiten Abschnitt (22-2) des zweiten Drehzapfenteils (22) längs einer Schraubachse, die im Wesentlichen mit der zweiten Achse (23) zusammenfällt, eingeschraubt ist, wobei die Schraube durch auf die zweite Achse (23) zentrierte Durchgangslöcher nacheinander das Gehäuse (10) und den Dämpfungsstopfen (50) durchquert.

7. Laufrolle nach einem der vorhergehenden Ansprüche, wenn abhängig von den Ansprüchen 2 und 3, **dadurch gekennzeichnet, dass** der Außenring (41) und der erste Block (51) aus einem Material gebildet sind, das aus den folgenden Materialien ausgewählt ist: PA (Polyamid) und POM (Polyoxymethylen), und dass der Innenring (41) und der zweite Block (52) aus einem Material gebildet sind, das aus den folgenden Materialien ausgewählt ist: PUR (Polyurethan) und TPE (thermoplastisches Elastomer aus der Familie der Copolymere).

## Claims

1. Castor for furniture foot comprising:
• a wheel case (10),
• at least one wheel (11),
• means for rotatably mounting said wheel (11) with respect to the wheel case (10) about a first axis (12),
• a cylindrical revolving pivot (20) comprising two parts, a first pivot part (21) capable of cooperating with the furniture and a second pivot part (22), and
• means for rotatably mounting the second pivot part (22) with respect to said wheel case (10) about a second axis (23) forming a non-zero angle with the first axis (12),
said second pivot part (22) comprising at least one first pivot portion (22-1) and a second pivot portion (22-2), the first pivot portion (22-1) being comprised between the second pivot portion (22-2) and the first pivot part (21), the means for rotatably mounting this second pivot part (22) with respect to the wheel case (10) about a second axis (23) comprising:
• a cylindrical revolving blind orifice (30) defined along the second axis (23), said blind orifice being made in said wheel case (10) by leading to its end (31) on a side wall of this said wheel case (10) through an opening (32), this said blind orifice (30) comprising at least two zones, a first zone (30-1) of a determined length and having a diameter greater than the first pivot portion (22-1) and a second zone (30-2) comprised between the bottom (33) of said blind orifice (30) and the first zone (30-1), the diameter of the second pivot portion (22-2) being equal to the diameter of the second zone (30-2),
**characterised in that it further comprises**
• a circular groove (25) made in the first pivot portion (22-1), the height taken along the second axis (23) of said circular groove being less than the length of said first zone (30-1), this said circular groove being made such that it faces this first zone and that the space defined between the two planes passing through its two ends and perpendicular to said second axis (23) fully intersects this first zone by further defining two parts (36, 37) of this first zone respectively on each side of this space,
• a cylindrical revolving ring (40) located in said groove (25), said ring having an outer diameter substantially equal to that of said first zone (30-1) of the blind orifice (30) and an inner diameter substantially equal to the diameter of the bottom wall of said groove (25), and
• a cylindrical revolving damper buffer (50) arranged between the bottom (33) of said orifice and the second pivot part (22), the outer diameter of this said damper buffer being substantially equal to the diameter of the second zone 30-2 of the blind orifice (30).

2. Castor according to claim 1, **characterised in that** said ring (40) is constituted of an inner ring (42) and an outer ring (41) located in one another and concentric, the inner ring being made of a material softer than the material wherein the outer ring is made.

3. Castor according to one of claims 1 and 2, **characterised in that** said damper buffer (50) is constituted of two blocks positioned on one another, a first block (51) located in contact with the second portion (22-2) of said second pivot part (22) and a second block (52) located between said first block (51) and the bottom (33) of said blind orifice (30), the first block (51) being made of a harder material than that wherein the second block (52) is made.

4. Castor according to one of claims 1 to 3, **characterised in that** the diameter of the second zone (30-2) is less than the diameter of the first zone (30-1).

5. Castor according to one of the preceding claims, **characterised in that** it comprises means (60) for maintaining said pivot (20) according to a degree of rotation in said orifice (30) and substantially without degree of translation with the aim of enabling the pivot (20) to pivot on itself about the second axis (23) and prevent the second pivot part (22) from exiting the blind orifice (30).

6. Castor according to claim 5, **characterised in that** the means (60) for maintaining said pivot (20) according to a degree of rotation in said orifice (30) and substantially without degree of translation are constituted by a screw screwed in the second portion (22-2) of the second pivot part (22) about a screwing axis substantially combined with the second axis (23), said screw, by through bores centre on said second axis (23), passing successively through said case (10) and said damper buffer (50).

7. Castor according to one of the preceding claims when it depends on claims 2 and 3, **characterised in that** the outer ring (41) and the first block (51) are made of a material chosen from among the following materials: PA (Polyamide) and POM (Polyoxymethylene), and that the inner ring (41) and the second block (52) are made of a material chosen from among the following materials: PUR (Polyurethane) and TPE (Thermoplastic elastomer of the copolymer family).
